**Europäisches Patentamt**

**European Patent Office**

**Office européen des brevets**

(11) Veröffentlichungsnummer: **0 251 379 B1**

# (12) EUROPÄISCHE PATENTSCHRIFT

(45) Veröffentlichungstag der Patentschrift: **28.04.93**

(21) Anmeldenummer: **87201144.0**

(22) Anmeldetag: **16.06.87**

(51) Int. Cl.⁵: **G06K 9/62**

(54) Verfahren zum Ausrichten oder Positionieren von Gegenständen.

(30) Priorität: **24.06.86 DE 3621056**

(43) Veröffentlichungstag der Anmeldung:
**07.01.88 Patentblatt 88/01**

(45) Bekanntmachung des Hinweises auf die
Patenterteilung:
**28.04.93 Patentblatt 93/17**

(84) Benannte Vertragsstaaten:
**AT BE CH DE ES FR GB GR IT LI NL SE**

(56) Entgegenhaltungen:
EP-A- 0 128 820
DE-B- 2 106 035
US-A- 4 567 609

PATENT ABSTRACTS OF JAPAN, Band 7, Nr.
172 (P-213)(1317), 29. Juli 1983; & JP-
A-5878266

(73) Patentinhaber: **POLYGRAM GmbH**
**Glockengiesserwall 3**
**W-2000 Hamburg 1(DE)**

(84) Benannte Vertragsstaaten:
**DE**

(73) Patentinhaber: **Polygram International Holding**
**B.V.**
**Gerrit van der Veenlaan 4**
**NL-3743 DN Baarn(NL)**

(84) Benannte Vertragsstaaten:
**BE CH ES FR GB GR IT LI NL SE AT**

(72) Erfinder: **Schulz, Dieter**
**An der Christuskirche 19**
**W-3000 Hannover 1(DE)**

(74) Vertreter: **Groenendaal, Antonius Wilhelmus**
**Maria et al**
**Internationaal Octrooibureau B.V. Prof.**
**Holstlaan 6**
**NL-5656 AA Eindhoven (NL)**

## Beschreibung

Die Erfindung bezieht sich auf ein Verfahren zum Ausrichten der Drehlage von drehbaren oder zum Positionieren von verschieblichen Gegenständen auf eine Sollage bzw. -position, insbesondere zum Ausrichten von optisch auslesbaren plattenförmigen Informationsträgern, wobei in einem Ausrichtvorgang die Gegenstände vorzugsweise quer zu ihrer Bewegungsrichtung zeilenweise optisch abgetastet werden und nach Auffindung einer mit einer abgespeicherten Referenzbildzeile mit optisch markantem Bildinhalt übereinstimmenden Bildzeile relativ zu deren bekannter Position ausgerichtet bzw. positioniert werden.

In der Technik ist es oft erforderlich, Gegenstände auf eine bestimmte Position oder Lage auszurichten, sei es aus optischen oder aus technischen Gründen. Insbesondere in automatisierten Herstellungs- oder Verarbeitungsvorgängen ist eine bestimmte Position bzw. Lage eines Gegenstandes oftmals erforderlich. Eine solche Positionierung kann bei dafür geeigneten Gegenständen dadurch vorgenommen werde, daß deren äußeren Form abgetastet wird und sie anschließend in eine bestimmte Lage gebracht werden. Dies ist jedoch nicht in allen Fällen möglich. So ist beispielsweise bei rotationssymmetrischen Gegenständen deren Ausrichtung auf eine bestimmte Drehlage lediglich durch mechanisches Abtasten nicht möglich. Hierzu müssen vielmehr auch optische Kriterien herangezogen werden. Bekannte Verfahren zum Ausrichten der Drehlage von drehbaren oder zum Positionieren von verschieblichen Gegenständen, welche auf optischer Basis arbeiten, benötigen daher eine optische Markierung auf dem Gegenstand. An dieser optischen Markierung orientiert sich dann die Ausrichtung bzw. Positionierung der Gegenstände. Dabei ist es wichtig, daß die Markierung sich optisch deutlich von der übrigen Oberfläche des Gegenstandes abhebt. Die Markierungen müssen also mit einer beliebigen anderen Stelle der Oberfläche des Gegenstandes möglichst wenig optisch verwechselbar sein. Dies hat jedoch zur Folge, daß die zur Ausrichtung bzw. Positionierung des Gegenstandes verwendete Markierung sich optisch deutlich hervorhebt. Dies ist jedoch nicht immer erwünscht; insbesondere bei Gegenständen, auf deren Optik es z B. beim Verkauf derselben ankommt, soll eine Markierung der oben beschriebenen Art möglichst wenig hervortreten. Bei derartigen Gegenständen wird es im allgemeinen sogar erwünscht sein, überhaupt keine solche optische Markierung eigens für deren Positionierung vorzusehen.

EP-A-0.128.820 zeigt ein Verfahren zum Auffinden eines Referenzmusters als zweidimensionalem Ausschnitt aus einem Bild, das im Vergleich zu allen anderen gleich großen Mustern optisch möglichst markante Merkmale hat. Zu diesem Zweck wird das Muster gefunden, das mit allen anderen am wenigsten korreliert. Dazu werden die Bildinhalte aller solchen Muster miteinander verglichen, die zugehörigen Korrelationskoeffizienten bestimmt und dasjenige Muster zum Referenzmuster bestimmt, dessen Bildinhalt am wenigsten mit dem Bildinhalt jedes anderen Musters korreliert.

Es ist Aufgabe der Erfindung, ein Verfahren zum Ausrichten der Drehlage von drehbaren oder zum Positionieren von verschieblichen Gegenständen zu schaffen, das ein Ausrichten der Gegenstände ohne eigens für diesen Zweck aufgebrachte Markierungen gestattet und gleichzeitig eine möglichst sichere Ausrichtung gewährleistet. Darüber hinaus soll das Verfahren für körperlich ähnliche, jedoch mit optisch verschiedener Oberfläche ausgestattete Gegenstände geeignet sein.

Die Aufgabe ist erfindungsgemäß dadurch gelöst, daß während eines, dem Ausrichtvorgang vorangehenden Suchvorganges diese Referenz-Bildzeile ermittelt wird, bei welchem Suchvorgang für jede Bildzeile deren Bildinhalt abgespeichert wird und ihr Bildinhalt mit den Bildinhalten übriger Bildzeilen verglichen wird, wobei die zugehörigen Korrelationskoeffizienten bestimmt werden und aus den zugehörigen Korrelationskoeffizienten der größte Korrelationskoeffizient ermittelt wird und wobei diejenige Bildzeile als Referenz-Bildzeile gewählt wird, deren größter Korrelationskoeffizient kleiner ist als die größten Korrelationskoeffizienten aller übrigen Bildzeilen, wobei bei der Bestimmung der Referenz-Bildzeile beim Vergleich des Bildinhaltes einer Bildzeile mit den Bildinhalten der übrigen Bildzeilen bei einem Überschreiten eines vorgegebenen Soll-Korrelationskoeffizienten die beiden betreffenden Bildzeilen als mögliche Referenz-Bildzeilen ausgeschieden und nicht nehe mit allen übrigen Bildzeilen verglichen werden.

Bei diesem Verfahren zum Ausrichten der Drehlage von drehbaren oder zum Positionieren von verschieblichen Gegenständen werden also mittels zeilenweiser, optischer Abtastung eines Gegenstandes alle zur Verfügung stehenden Bildzeilen nacheinander miteinander verglichen und die zugehörigen Korrelationskoeffizienten bestimmt. Anhand der Korrelationskoeffizienten wird dann diejenige Bildzeile als optisch markante Bildzeile ausgewählt, deren größter Korrelationskoeffizient mit einer der übrigen Bildzeilen kleiner ist als der größte Korrelationskoeffizient jeder anderen Bildzeile mit deren übrigen Bildzeilen. Es wird also für jede Bildzeile der größte Korrelationskoeffizient mit einer der übrigen Bildzeilen ermittelt. Diese größten Korrelationskoeffizienten der verschiedenen Bildzeilen werden dann miteinander verglichen. Als optisch markante Bildzeile wird diejenige Bildzeile ausgewählt, deren größter Korrelationskoeffizient mit einer der übrigen Bildzeilen am kleinsten ist. Damit ist diejenige Bildzeile gefunden, die sich optisch am stärksten von allen übrigen abhebt und damit am sichersten zur optischen Ausrichtung bzw. Positionierung des Gegenstandes dienen kann. Bei jedem nachfolgenden Ausrichten eines gleichartigen Gegenstandes wird dann immer wieder die optisch markante Referenz-Bildzeile als Orientierungshilfe aufgesucht und anschließend der Gegenstand mit dieser Orientierungshilfe in seine Sollposition gebracht. Dieses Verfahren hat vor allem dem Vorteil, daß es keinerlei besondere Markierungen, d. h. also Markierungen, die speziell für den Ausrichtvorgang aufgebracht sind, benötigt. Ferner wird für dieses Verfahren keine bestimmte, genau definierte Markierung benötigt; es ist lediglich erforderlich, daß auszurichtende Gegenstände optisch mit dem beim Suchen der Referenz-Bildzeile verwendeten Gegenstand möglichst ähnlich sind. Dies ist insbesondere bei solchen Gegenständen von Bedeutung, auf deren optische Wirkung es ankommt. Dies gilt beispielsweise für optisch auslesbare plattenförmige Informationsträger, wie z. B. Compact-Discs, deren optische Wirkung nicht durch zusätzliche, zur automatischen Ausrichtung benötigte Markierungen verunstaltet werden soll. Darüber hinaus muß bei Anwendung des erfindungsgemäßen Verfahrens bei der Gestaltung der Aufdrucke bzw. Labels der Informationsträger keine besondere Rücksicht auf das automatische Ausrichten der Informationsträger genommen werden. Das Verfahren ist nicht auf eine bestimmte optische Gestaltung der Informationsträger festgelegt, sondern an den jeweils vorhandenen Aufdruck einer Serie der Informationsträger adaptierbar. Auf diese Weise ist es auch relativ leicht möglich, verschiedene Serien von Informationsträgern mit verschiedenen Aufdrucken automatisch auszurichten.

Gemäß des Verfahrens nach der Erfindung wird also von allen zur Verfügung stehenden Bildzeilen zunächst eine beliebige Bildzeile ausgesucht und diese abgespeichert. Dabei wird auch deren Position relativ zu der vorgegebenen Sollage vermerkt. Anschließend wird der Bildinhalt dieser abgespeicherten Bildzeile mit den Bildinhalten aller übrigen Bildzeilen verglichen. Dabei werden die jeweils zugehörigen Korrelationskoeffizienten bestimmt und ebenfalls abgespeichert. Anschließend wird eine nächste Bildzeile in der gleichen Weise mitsamt ihrer Position abgespeichert und in gleicher Weise mit den übrigen Bildzeilen verglichen. Es wird also für jede Bildzeile ein ihr zugeordnetes Paket von Korrelationskoeffizienten ermittelt, das aus den Vergleichen dieser Bildzeile mit allen anderen übrigen Bildzeilen hervorgegangen ist. Es wird nun für jede Bildzeile aus dem ihr zugeordneten Paket von Korrelationskoeffizienten der jeweils größte Korrelationskoeffizient herausgesucht. Anschließend ist also für jede Bildzeile ein ihr zugeordneter, größter Korrelationskoeffizient, der aus den Vergleichen mit den übrigen Bildzeilen hervorgegangen ist, bekannt. Diese größten Korrelationskoeffizienten aller Bildzeilen werden anschließend miteinander verglichen. Dabei wird diejenige Bildzeile herausgesucht, deren größter Korrelationskoeffizient kleiner ist als jeder der größten Korrelationskoeffizienten der übrigen Bildzeilen. Damit ist diejenige Bildzeile gefunden, welche am wenigsten mit einer anderen Bildzeile korreliert. Mit anderen Worten, es wird diejenige Bildzeile ausgewählt, deren maximaler Korrelationskoeffizient mit einer der übrigen Bildzeilen am kleinsten ist. Diese Bildzeile wird nun als Referenz-Bildzeile gewählt, da sie sich in besonders markanter Weise von allen übrigen Bildzeilen utnerscheidet.

Sollen nun gleichartige Gegenstände im nachfolgenden ausgerichtet werden, so wird immer wieder diese als optisch markante Referenz-Bildzeile herausgesuchte Bildzeile aufgesucht. Da deren Lage relativ zur Sollposition bekannt ist, kann, nachdem die optisch markante Referenz-Bildzeile gefunden worden ist, die Sollposition aufgesucht werden.

Der Ausrichtvorgang dauert damit nicht länger als bei den bekannten Verfahren, bei denen eine bestimmte Markierung aufgesucht wird. Es muß lediglich bei Gegenständen mit anderer Optik bzw. anderem Aufdruck zunächst einmal die optisch markante Bildzeile gesucht werden. Dieser Vorgang dauert zwar etwas länger als der Ausrichtvorgang, muß jedoch für optisch gleichartige Gegenstände nur einmal vorgenommen werden. Insbesondere beim Ausrichten von Gegenständen relativ großer Stückzahlen ist dieser Nachteil relativ gering, verglichen mit den Vorteilen der Einsparung jeglicher zusätzlicher optischer Markierungen und der Möglichkeit der freien Gestaltung der Aufdrucke der Gegenstände.

Beim Vergleich des Bildinhaltes einer abgespeicherten Bildzeile mit dem Bildinhalt der übrigen Zeilen wird laufend überprüft, ob der dabei bestimmte Korrelationskoeffizient einen vorgegebenen Soll-Korrelationskoeffizienten überschreitet. Ist dies der Fall, werden beide an dem Vergleich beteiligte Bildzeilen als mögliche Referenz-Bildzeilen ausgeschieden, da sie sich zu wenig voneinander unterscheiden und somit von vornherein als Referenz-Bildzeilen nicht in Betracht kommen. Das frühzeitige Ausscheiden solcher Bildzeilen bietet den Vorteil, daß der Suchvorgang nach der Referenz-Bildzeile entscheidend verkürzt wird, da einmal mit anderen Bildzeilen zu stark korrelierende Bildzeilen sofort ausgeschieden werden und für weitere Vergleiche nicht mehr herangezogen werden müssen und so die nachfolgenden Vergleichsvorgänge verkürzt werden.

Nach einer weiteren Ausgestaltung der Erfindung ist vorgesehen, daß nach dem Vergleich des Bildinhaltes einer Bildzeile mit den Bildinhalten aller übrigen Bildzeilen bei einem Unterschreiten eines vorgegebenen Korrelationskoeffizienten bei allen diesen Vergleichen der größte, bei diesen Vergleichen ermittelte Korrelationskoeffizient als neuer Soll-Korrelationskoeffizient gewählt wird.

Wird beim Vergleich des Bildinhaltes einer abgespeicherten Bildzeile mit den Bildinhalten aller übrigen Bildzeilen der vorgegebene Soll-Korrelationskoeffizient ausnahmslos unterschritten, so wird der größte, bei all diesen Vergleichen bestimmte Korrelationskoeffizient als neuer Soll-Korrelationskoeffizient eingesetzt. Dies hat den Vorteil, daß eine laufende Anpassung des Soll-Korrelationskoeffizienten vorgenommen wird. Ist der vorgegebene Soll-Korrelationskoeffizient größer als tatsächlich notwendig gewählt, so wird der Soll-Korrelationskoeffizient automatisch im Laufe der Vergleiche der Bildzeilen verkleinert und so an das tatsächlich vorhandene Korrelationsniveau angepaßt. Diese Verkleinerung des Soll-Korrelationskoeffizienten hat darüber hinaus eine weitere Beschleunigung des Suchvorgangs nach der Referenz-Bildzeile zur Folge, da nach einer oben beschriebenen Verkleinerung des Soll-Korrelationskoeffizienten bei einem Einsatz der Verfahrensmerkmale nach Anspruch 3 wiederum mehr Bildzeilen von vornherein als optisch markante Bildzeilen ausgeschieden werden können, so daß sich der Suchvorgang nach der Referenz-Bildzeile weiter verkürzt.

Nach einer weiteren Ausgestaltung der Erfindung ist vorgesehen, daß auch der neue Soll-Korrelationskoeffizient wieder in der gleichen Weise ersetzt wird, falls dieser bei einem nachfolgenden Vergleich des Bildinhaltes einer Zeile mit den Bildinhalten aller übrigen Zeilen immer unterschritten wird. Die oben beschriebene Art und Weise des Ersetzens des Soll-Korrelationskoeffizienten kann so auch bei den weiteren folgenden Vergleichen immer wieder vorgenommen werden.

Nach einer weiteren Ausgestaltung der Erfindung ist vorgesehen, daß beim Vergleich des Bildinhaltes einer abgespeicherten Bildzeile mit den Bildinhalten aller übrigen Bildzeilen die der abgespeicherten Bildzeile benachbarten Bildzeilen ausgelassen werden.

In Abhängigkeit von der gewünschten Genauigkeit und von der Art des Aufdruckes kann es von Vorteil sein, eine gerade abgespeicherte Bildzeile nicht mit deren direkten Nachbarn zu vergleichen. Ist auf dem Gegenstand beispielsweise ein optisches Element vorhanden, welches mehrere Bildzeilen überdeckt, so werden natürlich diese Bildzeilen untereinander einen relativ großen Korrelationskoeffizienten aufweisen. Dennoch kann es sinnvoll sein, eine dieser Bildzeilen als optisch markante Bildzeile zu wählen, da der Inhalt dieser Bildzeilen sich von allen übrigen relativ stark unterscheidet. Werden nun bei dem Vergleich einer dieser Bildzeilen die direkt benachbarten ausgeschieden, so kann eine dieser Bildzeilen als optisch markante Bildzeile herangezogen werden. Diese unterscheidet sich dann jedoch von ihren direkten Nachbarn nur in relativ geringem Maße, so daß bei dem Ausrichtvorgang eine gewisse Unsicherheit entstehen kann. Es muß hier also abgewogen werden, mit welcher Genauigkeit der Ausrichtvorgang später erfolgen soll und wie viele direkt benachbarte Bildzeilen bei einem Vergleich nicht berücksichtigt werden.

Nach einer weiteren Ausgestaltung der Erfindung ist vorgesehen, daß bei jedem neuen Ausrichtvorgang eines Gegenstandes der gleichen Art als Maß (AS) für die Ausrichtsicherheit folgender Quotient bestimmt wird:

$$ AS = \frac{K_A - K_{M2A}}{1 - K_{M2S}} , $$

wobei

$K_A$     der Korrelationskoeffizient zwischen den Bildinhalten der beim Ausrichten als Referenzbildzeile identifizierten Bildzeile und der abgespeicherten Referenzbildzeile,

$K_{M2A}$     der Korrelationskoeffizient zwischen den Bildinhalten der beim Ausrichten am meisten mit der Referenzbildzeile korrelierenden Bildzeile und der abgespeicherten Referenzbildzeile,

$K_{M2S}$     der Korrelationskoeffizient zwischen den Bildinhalten der abgespeicherten, am meisten mit der Referenzbildzeile korrelierenden Bildzeile und der abgespeicherten Referenzbildzeile sind.

Bei der Suche nach der Referenzbildzeile wurde ebenfalls diejenige Bildzeile gesucht, deren Bildinhalt von allen übrigen Bildzeilen am stärksten mit der Referenzbildzeile korreliert. Es wurde ebenfalls bereits der Korrelationskoeffizient zwischen dieser Bildzeile und der gefundenen Referenzibildzeile bestimmt. Dies ist der Korrelationskoeffizient $K_{M2S}$ in dem Quotienten zur Bestimmung der Ausrichtsicherheit AS.

Bei jedem neuen Ausrichtvorgang werden nun zwei weitere Korrelationskoeffizienten bestimmt. Dies ist erstens der Korrelationskoeffizient $K_A$, der angibt, wie stark die beim Suchvorgang nach der Referenzibildzeile als solche gefundene Bildzeile und die beim späteren Ausrichtvorgang wieder als Referenzbildzeile identifizierte Bildzeile miteinander korrelieren. Außerdem wird der Korrelationskoeffizient $K_{M2A}$ bestimmt. Dieser gibt die Korrelation zwischen den Bildinhalten folgender zwei Bildzeilen an:

1. der Bildzeile, die beim Austrichten von allem übrigen Bildzeilen am meisten mit der abgespeicherten Referenzbildzeile korreliert, und,

2. dieser abgespeicherten Refernzbildzeile, die bereits vor Beginn des Ausrichtens beim Suchvorgang nach der Referenzbildzeile als solche abgespeichert wurde.

Mittels dieser drei Korrelationskoeffizienten kann nun nach der oben angengebenen Formel die Ausrichtsicherheit AS bestimmt werden. Es ist damit für jeden Ausrichtvogang ein Maß für die Sicherheit des richtigen Ausrichtens gewonnen. Unterschreitet diese Ausrichtsicherheit einen bestimmten Wert, so kann davon ausgegangen werden, daß entweder der Ausrichtvorgang nicht korrekt abgelaufen ist oder daß der Aufdruck des gerade auszurichtenden Gegenstandes sich in zu großem Maße von dem Aufdruck des bei der Bestimmung der Referenzbildzeile verwendeten Gegenstandes unterscheidet.

Nach einer weiteren Ausgestaltung der Erfindung ist vorgesehen, daß der Ausrichtvorgang abgebrochen und/oder eine Fehlermeldung gegeben wird, falls die Ausrichtsicherheit AS einen vorgegebenen Wert unterschreitet. Unterschreitet die Ausrichtsicherheit AS einen vorgegebenen Wert, so ist es aus den oben erwähnten Gründen sinnvoll, den Ausrichtvorgang abzubrechen und/oder eine Fehlermeldung zu geben. Auf diese Weise wird nicht nur die Sicherheit des Ausrichtens erhöht, sondern es wird auch dann eine Fehlermeldung gegeben, wenn falsche Gegenstände oder mit einem falschen Aufdruck versehene Gegenstände ausgerichtet werden sollen.

Nach einer weiteren Ausgestaltung der Erfindung ist vorgesehen, daß die zeilenweise optische Abtastung der Gegenstände durch ein geeignet gewähltes Farbfilter hindurch vorgenommen wird. Je nach Frequenzspektrum des Aufdrucks bzw. des Gegenstandes kann zur Hervorhebung einzelner Elemente des Aufdruckes oder des Gegenstandes bei der optischen Abtastung ein Farbfilter vorgesehen sein, das einzelne optische Elemente einer bestimmten Farbe infolge Kontrastverstärkung optisch hervortreten läßt.

Ein Ausführungsbeispiel der Erfindung wird anhand der Zeichnungen näher erläutert. Es zeigen:

Fig. 1 ein Blockschaltbild einer Schaltungsanordnung zur Ausrichtung von Compact-Discs,

Fig. 2 ein Ausgangssignal des Korrelators KOR nach Fig. 1,

Fig. 3 ein erstes Ausgangssignal der Weiche WE der Schaltungsanordnung nach Fig. 1,

Fig. 4 ein zweites Ausgangssignal der Weiche WE der Schaltungsanordnung nach Fig. 1.

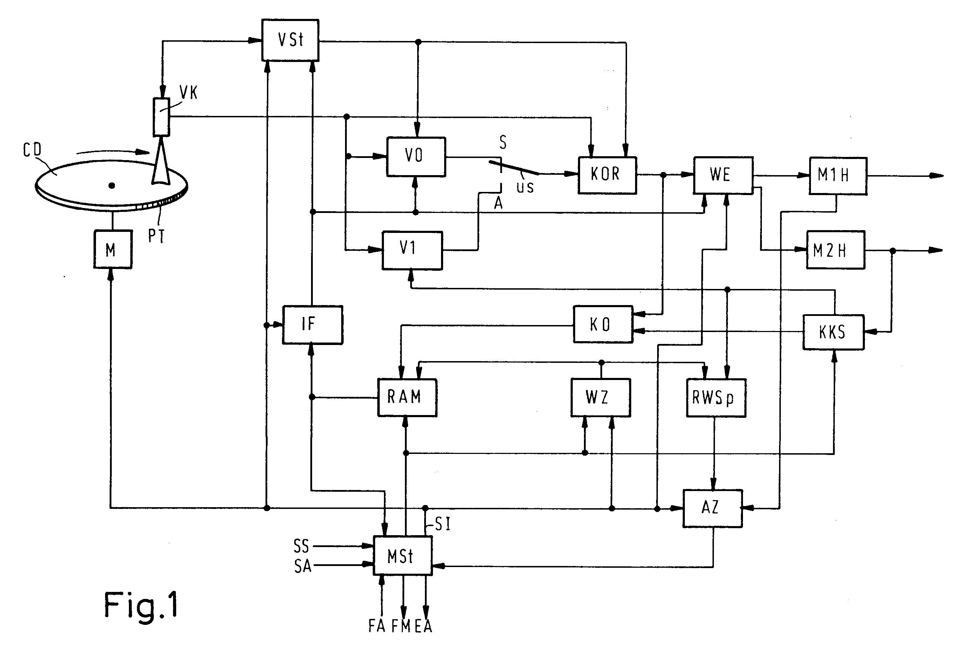

In Fig. 1 ist ein Blockschaltbild einer Schaltungsanordnung dargestellt, die nach dem erfindungsgemäßen Verfahren arbeitet und Compact-Discs entsprechend ihrem Label-Aufdruck ausrichtet.

Die Steuerung der Schaltungsanordnung wird im wesentlichen durch eine Motorsteuerung MSt vorgenommen. Diese Motorsteuerung MSt erhält dazu von außen Steuersignale und gibt nach außen Zustandssignale. Insbesondere erhält die Motorsteuerung von außen ein Startsignal SS zum Starten des Suchvorgangs der optisch markanten Bildzeile und ein Startsignal SA zum Starten des Ausrichtvorganges. Für den späteren Ausrichtvorgang erhält die Motorsteuerung ferner für jede einzelne auszurichtende Compact-Disc eine Ausrichtfreigabe FA. Als Zustandssignale gibt die Motorsteuerung nach außen ein Endesignal für den Ausrichtvorgang EA und ein Fehlersignal FM. Für eine neue Serie von Compact-Discs mit einem bestimmten Aufdruck muß zunächst die Referenz-Bildzeile mit optisch markantem Inhalt, also diejenige Bildzeile, die sich optisch am stärksten von allen übrigen abhebt, gesucht werden. Dazu wird zunächst eine in Fig. 1 schematisch dargestellte Compact-Disc CD in der gewünschten Soll-Position auf einen in Fig. 1 schematisch dargestellten Plattenteller PT gelegt. Dieser Plattenteller PT ist mittels eines Schrittmotors M antreibbar. Erhält die Motorsteuerung MSt nun das Startsignal zum Suchvorgang SS, so werden in einem Speicher RAM zunächst sämtliche Speicherstellen auf log. 1 gesetzt. Dieser Speicher RAM enthält so viele Speicherstellen, wie Winkelpositionen der Compact-Discs CD mittels des Schrittmotors M angefahren werden. Der Speicher RAM wird mittels eines Winkelzählers WZ adressiert, welcher ebenfalls zu Beginn des Suchvorganges durch die Motorsteuerung MSt auf Null gesetzt wird. Ferner gibt die Motorsteuerung MSt nach Erhalt des Signales SS einen gewünschten Soll-Korrelationskoeffizienten an eine Schaltung KKS, die diesen abspeichert.

Für den anschließenden Suchvorgang gibt die Motorsteuerung einen Startimpuls an einen Impulsformer IF und eine Video-Steuerung VSt. Die Video-Steuerung VSt steuert eine Video-Kamera VK, welche die auf den Plattenteller PT aufgelegte CD mit einer Bildzeile radial abtastet. Die Video-Kamera VK liefert ein digitales Ausgangssignal VD der entsprechenden Bildzeile. Beim Beginn eines Suchvorganges gibt die Motorsteuerung einen entsprechenden Impuls an den Impulsformer IF, der wiederum über die Video-Steuerung VSt in der Kamera VK die Abtastung einer Bildzeile startet.

Das entsprechende digitale Bildsignal VD wird in einen ersten digitalen Bildzeilenspeicher VO eingelesen, welcher ebenfalls durch den Impulsformer IF gesteuert wird. Ferner erhält der digitale Bildzeilenspeicher VO ein Freigabesignal von der Video-Steuerung VSt, sobald das Ausgangssignal der Video-Kamera gültig ist. Auf diese Weise wird also zunächst eine Zeile in den Video-Bildzeilenspeicher VO abgespeichert. Anschließend gibt die Motorsteuerung MSt einen Schrittimpuls SI an den Schrittmotor M. Dieser Schrittimpuls SI wird ebenfalls der Video-Steuerung VSt und dem Winkelzähler WZ zugeführt, der mit dessen Hilfe den gerade eingestellten Winkel bestimmt und abspeichert. Die Compact-Disc ist also nun infolge des Impulses SI mittels des Schrittmotors M um eine Position weitergedreht. Gleichzeitig erhält die Video-Steuerung VSt den Impuls SI, so daß die Video-Kamera VK ein Bildsignal der nächsten Bildzeile liefert. Dieses wird einem Korrelator KOR zugeführt, der ebenfalls das dem Bildzeichenspeicher VO zugeführte Gültigkeitssignal erhält. Dem Korrelator KOR ist an einem Eingang ein Ausgangssignal des digitalen Bildzeilenspeichers VO zugeführt, das das in dem Bildzeilenspeicher VO abgespeicherte Bildsignal liefert. In dem Korrelator KOR werden dieses und das aktuelle, von der Video-Kamera gelieferte Signal VD miteinander verglichen und der entsprechende Korrelationskoffizient bestimmt. Dieser Vorgang wiederholt sich nun für alle übrigen Bildzeilen, welche mit der in dem Speicher VO abgespeicherten Bildzeile verglichen werden. Dazu gibt die Motorsteuerung entsprechende Schrittimpulse SI an den Motor, die Video-Steuerung VSt und den Winkelzähler WZ.

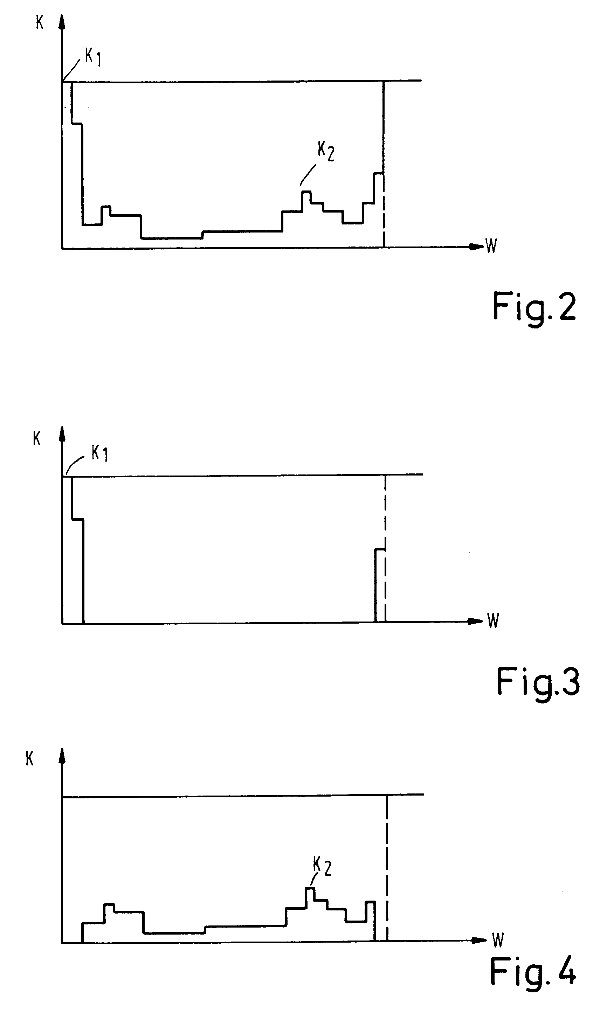

Nach einem kompletten Umlauf der Compact-Disc sind an dem Ausgang des Korrelators nacheinander die Korrelationskoeffizienten sämtlicher Vergleiche erschienen. In Fig. 2 ist dieses Ausgangssignal des Korrelators KOR schematisch dargestellt. Diese Korrelationskoeffizienten sind einer Weiche WE zugeführt, welche diese auf einen ersten Ausgang und einen zweiten Ausgang aufteilt. Auf den ersten Ausgang werden die Korrelationskoeffizienten gegeben, die beim Einlesen der Vergleichszeile in VO und dem Vergleichen derselben in KOR entstehen, d. h. also die durch den Vergleich der eingelesenen Zeile mit sich selbst entstehen. Diese liegen bei dem Wert Eins. Gegebenenfalls können auf diesen Ausgang auch die Korrelationskoeffizienten gegeben werden, welche beim Vergleich der abgespeicherten Zeile mit dieser direkt benachbarten Zeilen entstehen. Ein in Fig. 3 schematisch dargestelltes Ausgangssignal des ersten Ausganges der Weiche WE bezieht sich auf ein solches Beispiel. Die in den Bildzeilenspeicher VO eingelesene Bildzeile wird zunächst mit sich selber verglichen, so daß der zugehörige Korrelationskoeffizient K1 gleich 1 ist. Ferner erscheinen an diesem Ausgang der Weiche WE die Korrelationskoeffizienten der Zeile in VO mit den dieser direkt benacharten Bildzeilen. Die Werte dieser beiden Korrelationskoeffizienten sind in dem in Fig. 3 dargestellten Beispiel noch relativ groß, jedoch von 1 verschieden. Auf einen zweiten Ausgang der Weiche WE werden sämtliche übrigen, beim Vergleich entstandenen Korrelationskoeffizienten gegeben. Diese im Verlaufe eines Umlaufs der CD am zweiten Ausgang der Weiche WE erscheinenden Korrelationskoeffizienten sind für ein beliebig gewähltes Beispiel in Fig. 4 schematisch dargestellt.

In einem ersten Speicher M1H wird das während einer Umdrehung der CD gewonnene maximale Signal des ersten Ausgangs der Weiche WE abgespeichert und in einem zweiten Speicher M2H das während eines Vergleichsumlaufes der CD gewonnene maximale, am zweiten Ausgang der Weiche WE erschienene Signal abgespeichert. In dem in Fig. 4 dargestellten Beispiel wäre dieser in M2H gespeicherte Wert der von K2, der in dem Beispiel etwa 0,4 beträgt. Der in M1H abgespeicherte Wert wäre der von K1 (Fig. 3), der im Normalfall gleich 1 ist. Die beiden Speicher M1H und M2H liefern an ihrem Ausgang die gespeicherten Werte, die in in der Zeichnung nicht dargestellter Weise weiterverarbeitet werden können. Dies kann z. B. in der Weise geschehen, daß zur Bestimmung einer späteren Ausrichtsicherheit aus den beiden Signalen der Quotient gebildet wird.

Alle während eines solchen Suchumlaufs gewonnenen Korrelationskoeffizienten, welche an dem Ausgang des Korrelators KOR nacheinander erscheinen, werden in einem Komparator KO mit dem in der Schaltung KKS abgespeicherten Soll-Korrelationskoeffizienten verglichen. Alle Bildzeilen, bei deren Vergleich mit der in der VO abgespeicherten Bildzeile der entsprechende Korrelationskoeffizient den in KKS abgespeicherten Soll-Korrelationskoeffizienten überschreitet, werden die entsprechenden Speicherstellen in dem Speicher RAM gelöscht. Der Speicher RAM wird mittels des Winkelzählers WZ adressiert, der die Stellimpulse SI mitzählt und so den Speicher RAM auf die gerade aktuelle Bildzeile adressiert. Ferner wird bei jeder Bildzeile, bei deren Vergleich mit der in der VO abgespeicherten Bildzeile der entsprechende Korrelationskoeffizient den in KKS abgespeicherten Soll-Korrelationskoeffizienten unterschreitet, die entsprechende Position in einem Referenz-Winkelspeicher RWSp abgespeichert. Dazu ist dem Referenz-Winkelspeicher RWSp an einem Eingang ein Signal von dem Winkelzähler WZ zugeführt, das dem Referenz-Winkelspeicher RWSp die momente Position angibt. Außerdem wird ein Speichersignal an einen zweiten, digitalen Bildzeilenspeicher VI gegeben. Dieser Bildzeilenspeicher VI

ist an seinem Eingang mit dem Signal VD der Video-Kamera VK verbunden und speichert das Bildsignal der entsprechenden Bildzeile ab. Dies bedeutet also, daß in dem Bildzeilenspeicher VI und im Referenz-Winkelspeicher RWSp immer dann der Bildinhalt einer neuen Bildzeile bzw. deren Position abgespeichert werden, wenn bei einem Vergleich dieser Bildzeile mit der in VO abgespeicherten Bildzeile der zugehörige Korrelationskoeffizient den in KKS abgespeicherten Soll-Korrelationskoeffizienten unterschritten hat.

Ferner wird am Ende eines Vergleichsumlaufes in der Schaltung KKS festgestellt, ob der in M2H gespeicherte Wert den Soll-Korrelationskoeffizienten unterschreitet. Da der in M2H gespeicherte Wert der größte beim Vergleich zwischen den Bildzeilen ermittelte Korrelationskoeffizient ist, wird dieser dann in der Schaltung KKS als neuer Soll-Korrelationskoeffizient abgespeichert, wenn er kleiner ist als der bisher abgespeicherte Soll-Korrelationskoeffizient.

Nach einem Suchumlauf der CD sind also nun für diejenigen Stellen, für die ein größerer Korrelationskoeffizient als der in KKS abgespeichert ermittelt wurde, in dem Speicher RAM gelöscht. Wurden dagegen ausschließlich kleinere Korrelationskoeffizienten gemessen, so wurde der Soll-Korrelationskoeffizient in KKS auf den höchsten gemessenen Wert korrigiert.

Nachdem die erste in VO abgespeicherte Bildzeile auf die oben beschriebene Weise mit allen übrigen verglichen wurde, wird nun die nächste Bildzeile in VO eingelesen und in der gleichen Weise mit allen übrigen verglichen. Es wird nun jedoch zusätzlich von dem RAM dann ein Signal an den Impulsformer IF gegeben, wenn eine angesteuerte Bildzeile in diesem bereits markiert wurde, d. h. also wenn ihr Korrelationskoeffizient mit einer anderen Bildzeile den in KKS abgespeicherten Soll-Korrelationskoeffizienten bei einem früheren Vergleich bereits einmal überschritten hatte. Entsprechend markierte Zeilen, für das RAM ein Signal an IF gibt, werden dann nicht mehr in VO abgespeichert und mit den anderen Zeilen verglichen. Es wird vielmehr gleich die nächste Zeile angefahren und in VO abgespeichert, dies gilt jedoch selbstverständlich nur dann, wenn diese nicht bereits ebenfalls im RAM als ausgeschiedene Zeile markiert wurde. Ferner wird laufend dann eine Bildzeile in VI und ihre Position in RWSp abgespeichert, wenn, wie oben beschrieben, bei einem Vergleich dieser mit der in VO abgespeicherten Bildzeile der in KKS gespeicherte, gegebenenfalls schon nach unten korrigierte Soll-Korrelationskoeffizient unterschritten wird.

Diese Vorgänge wiederholen sich so lange, bis in dem Speicher RAM schließlich die Speicherzellen für sämtliche Bildzeilen gelöscht sind. Es steht dann in dem Referenzwinkelspeicher RWSp der Winkel der Referenz-Bildzeile mit optisch markantem Bildinhalt, und diese Bildzeile selbst ist in dem Speicher VI abgespeichert. Ferner ist in dem Speicher M2H der maximale Korrelationskoeffizient dieser Bildzeile mit einer der übrigen Bildzeilen abgespeichert. Es ist nun also die gesuchte Referenz-Bildzeile mit optisch markantem Inhalt ermittelt und sowohl deren Bildinhalt wie auch deren Position relativ zur Soll-Position der CD abgespeichert.

Die abgespeicherten Werte können nun für die nachfolgenden Ausrichtvorgänge der wieder auf den Plattenteller PT aufgelegten CDs benutzt werden. Diese Compact-Discs CD sind nun jedoch in einer beliebigen Drehlage auf den Plattenteller PT aufgelegt und sollen nun mittels der Schaltungsanordnung in die Soll-Position gedreht werden.

Vor dem Beginn eines Ausrichtvorganges wird zunächst das Signal SA an die Motorsteuerung gegeben, die daraufhin einen Schalter US in eine Position A setzt. In dieser Position A verbindet der Schalter US einen Ausgang des zweiten Video-Speichers VI mit dem Eingang des Korrelators KOR. Während des Suchlaufvorganges, also nachdem das Signal SS gegeben worden war, stand der Schalter US in einer ersten Position S, die, wie oben beschrieben, den Ausgang des Bildzeilenspeichers VO mit dem Eingang des Korrelators KOR verband.

Wird nun das Ausrichtfreigabesignal FA an die Motorsteuerung gegeben, so wird die erste CD ausgerichtet. Dies geschieht in der Weise, daß die in dem Bildspeicher VI abgespeicherte Referenz-Bildzeile mit optisch markantem Inhalt mit allen übrigen Bildzeilen in dem Korrelator KOR verglichen wird. Der Ablauf dieses Vergleiches ist im wesentlichen der gleiche wie bei dem Suchvorgang, es wird lediglich nicht die im Speicher VO abgespeicherte Bildzeile mit den übrigen verglichen, sondern die in VI abgespeicherte Bildzeile. Spätestens am Ende eines Umlaufes ist die Bildzeile mit optisch markantem Inhalt mit der gleichen, in VI abgespeicherten Referenz-Bildzeile verglichen worden und infolgedessen an dem ersten Ausgang der Weiche WE ein entsprechender Korrelationskoeffizient nahe Eins in den Speicher MIH eingelesen worden. Sobald dies geschehen ist, gibt der Speicher MIH ein entsprechendes Signal an einen Ausrichtzähler AZ. Dem Ausrichtzähler ist ebenfalls der im Referenz-Winkelspeicher abgespeicherte Referenzwinkel der optisch markanten Bildzeile zugeführt. Aus diesen beiden Winkeln bestimmt der Ausrichtzähler durch Differenzbildung die Lage der Soll-Position. Im Verlaufe eines weiteren Umlaufes gibt nun der Ausrichtzähler dann einen Stop-Impuls an die Motorsteuerung, wenn diese Soll-Position erreicht ist. Damit ist der Ausrichtvorgang beendet, und die Motorsteuerung gibt das Signal "Ende des Ausrichtvorganges" EA ab. Im Verlaufe des Suchvorganges nach der Referenz-Bildzeile mit optisch markantem Bildinhalt ist im Laufe der Vergleiche wiederum der größte Korrelationskoeffizient mit einer der übrigen Bildzeilen abgespeichert worden. Da dieser Wert in der Schaltung SA bereits beim Suchvorgang nach der Referenz-Bildzeile mit optisch markantem Bildinhalt abgespeichert wurde, kann dieser abgespeicherte Wert $K_{m2S}$ zur Bestimmung der Ausrichtsicherheit herangezogen werden. Wie oben beschrieben, kann mit Hilfe dieses und zweier weiter beim Ausrichten zu bestimmender Korrelationskoeffizienten die Ausrichtsicherheit AS errechnet werden. Gegebenenfalls kann durch die Schaltung SA beim Unterschreiten eines vorgegebenen Wertes der Ausrichtsicherheit ein entsprechendes Fehlersignal an die Motorsteuerung gegeben werden, welche wiederum nach außen das Signal FM als Fehlermeldung gibt.

Die Schaltungsanordnung dieses Ausführungsbeispieles dient dazu, Compact-Discs entsprechend der Lage ihres Label-Aufdruckes auszurichten. Eine ähnliche Anordnung ist jedoch auch für andere Gegenstände denkbar, welche rotationssymmetrisch sind und auf eine bestimmte Drehlage ausgerichtet werden sollen. Ähnliches gilt für verschiebliche Gegenstände, die in eine bestimmte Position gebracht werden sollen. Auch hier können entsprechende optische Markierungen als Indiz für deren Position herangezogen werden und zum Positionieren nach dem Verfahren verwendet werden.

Denkbar ist sogar, das Verfahren zur Ermittlung einer Fehlstelle zu verwenden. Auf das Beispiel der Compact-Discs übertragen, würde dies z. B. bedeuten, daß eine Compact-Disc ohne jeglichen Aufdruck oder Markierung entsprechend dem Verfahren abgetastet wird. Es darf sich dann keine Zeile mit optisch markantem Bildinhalt ergeben, sofern die Compact-Disc fehlerfrei ist. Ergibt sich jedoch dennoch eine solche Bildzeile, so weist diese einen optisch erkennbaren Fehler auf. Wie groß dieser Fehler sein darf, wird durch die Größe des vorgegebenen Soll-Korrelationskoeffizienten vorgegeben. In diesem Fall erfolgt eine Fehlermeldung beim Unterschreiten des Soll-Korrelationskoeffizienten.

**Patentansprüche**

1. Verfahren zum Ausrichten der Drehlage von drehbaren oder zum Positionieren von verschieblichen Gegenständen auf eine Sollage bzw. -position, insbesondere zum Ausrichten von optisch auslesbaren plattenförmigen Informationsträgern, wobei in einem Ausrichtvorgang die Gegenstände vorzugsweise quer zu ihrer Bewegungsrichtung zeilenweise optisch abgetastet werden und nach Auffindung einer mit einer Referenz-Bildzeile übereinstimmenden Bildzeile mit optisch markantem Bildinhalt relativ zu deren bekannter Position ausgerichtet bzw. positioniert werden, wobei während eines, dem Ausrichtvorgang vorangehenden Suchvorganges diese Referenz-Bildzeile ermittelt wird, bei welchem Suchvorgang für jede Bildzeile deren Bildinhalt abgespeichert wird und ihr Bildinhalt mit den Bildinhalten übriger Bildzeilen verglichen wird, wobei die zugehörigen Korrelationskoeffizienten bestimmt werden und aus den zugehörigen Korrelationskoeffizienten der größte Korrelationskoeffizient ermittelt wird und wobei diejenige Bildzeile als Referenz-Bildzeile gewählt wird, deren größter Korrelationskoeffizient Kleiner ist als die größten Korrelationskoeffizienten aller übrigen Bildzeilen, wobei bei der Bestimmung der Referenz-Bildzeile beim Vergleich des Bildinhaltes einer Bildzeile mit den Bildinhalten der übrigen Bildzeilen bei einem Überschreiten eines vorgegebenen Soll-Korrelationskoeffizienten die beiden betreffenden Bildzeilen als mögliche Referenz-Bildzeilen ausgeschieden und nicht mehr mit allen übrigen Bildzeilen verglichen werden.

2. Verfahren nach Anspruch 1, dadurch gekennzeichnet, daß nach dem Vergleich des Bildinhaltes einer Bildzeile mit den Bildinhalten aller übrigen Bildzeilen bei einem Unterschreiten eines vorgegebenen Korrelationskoeffizienten bei allen diesen Vergleichen der größte, bei diesen Vergleichen ermittelte Korrelationskoeffizient als neuer Soll-Korrelationskoeffizient gewählt wird.

3. Verfahren nach Anspruch 2, dadurch gekennzeichnet, daß auch der neue Soll-Korrelationskoeffizient wieder in der gleichen Weise ersetzt wird, falls dieser bei einem nachfolgenden Vergleich des Bildinhaltes einer Zeile mit den Bildinhalten aller übrigen Zeilen immer unterschritten wird.

4. Verfahren nach einem oder mehreren der Ansprüche 1 bis 3, dadurch gekennzeichnet, daß beim Vergleich des Bildinhaltes einer abgespeicherten Bildzeile mit den Bildinhalten aller übrigen Bildzeilen die den abgespeicherten Bildzeilen benachbarten Bildzeilen ausgelassen werden.

5. Verfahren nach einem oder mehreren der Ansprüche 1 bis 4, dadurch gekennzeichnet, daß während des Suchvorganges der Korrelationskoeffizient $K_{M2S}$ zwischen den Bildinhalten der als Referenzbildzeile gewählten Bildzeile und der am meisten mit der gewählten Bildzeile korrelierenden Bildzeile bestimmt wird, wobei bei jedem neuen Ausrichtvorgang der Korrelationskoeffizient $K_A$ zwischen den Bildinhalten der beim Ausrichten als mit der Referenzbildzeile übereinstimmenden Bildzeile und der abgespeicherten Referenzbildzeile bestimmt wird und für die entsprechende andere, nicht mit der Referenzbildzeile übereinstimmende Bildzeile, der Korrelationskoeffizient $K_{M2A}$ zwischen dem Bildinhalt der Referenzbildzeile und dem Bildinhalt der beim Ausrichten als am meisten mit der Referenzbildzeile korrelierenden Bildzeile bestimmt wird, und wobei bei jedem neuen Ausrichtvorgang eines Gegenstandes der gleichen Art als Maß (AS) für die Ausrichtsicherheit der folgende Quotient bestimmt wird:

$$AS = \frac{K_A - K_{M2A}}{1 - K_{M2S}}$$

6. Verfahren nach Anspruch 5, dadurch gekennzeichnet, daß der Ausrichtvorgang abgebrochen und/oder eine Fehlermeldung gegeben wird, falls das Maß (AS) für die Ausrichtsicherheit einen vorgegebenen Wert unterschreitet.

7. Verfahren nach einem oder mehreren der Ansprüche 1 bis 6, dadurch gekennzeichnet, daß die zeilenweise optische Abtastung der Gegenstände durch ein geeignet gewähltes Farbfilter hindurch vorgenommen wird.

**Claims**

1. Method for aligning the rotational position of rotatable objects or for bringing translatable objects into a nominal orientation or position, in particular for aligning optically readable disc-shaped information carriers, the objects being preferably optically scanned line by line in an alignment operation in a direction transverse to their direction of motion and, after detection of a picture line matching a stored reference picture line with an optically characteristic picture content, are aligned or positioned relative to their known positions whilst this reference picture line is determined during a search operation preceding the alignment operation, during which search operation the picture content for each picture line is stored and compared with the picture contents of other picture lines, the associated correlation coefficients are determined and the largest of these associated correlation coefficients is determined from the associated correlation coefficients, and the picture line whose largest correlation coefficient is smaller than the largest correlation coefficients of all the other picture lines is selected to be the reference picture line, and if a predetermined nominal correlation coefficient is found to be larger when the picture content of a picture line is compared with the picture contents of the other picture lines for determining the reference picture line, the two picture lines concerned are rejected as possible reference picture lines and are no longer compared with all the other picture lines.

2. Method as claimed in claim 1, characterized in that if after the comparison of the picture content of a picture line with the picture contents of all the other picture lines, a predetermined correlation coefficient is found to be larger during all these comparisons, the largest correlation coefficient determined during these comparisons is selected as the new nominal correlation coefficient.

3. Method as claimed in Claim 2, characterized in that also the new nominal correlation coefficient is replaced in the same way, if during a subsequent comparison of the picture content of a line with the picture contents of all the other lines, this nominal correlation coefficient is each time found to be larger.

4. Method as claimed in one or several of the Claims 1 to 3, characterized in that the picture lines adjacent the stored picture lines are rejected when the picture content of a stored picture line is compared with the picture contents of all the other picture lines.

5. Method as claimed in one of the Claims 1 to 4, characterized in that during the search operation $K_{M2S}$ is the correlation coefficient between the picture content of the picture line selected as the reference picture line and the picture content of the picture line correlating most with the selected picture line, whilst during each new alignment operation $K_A$ is the correlation coefficient between the picture content of the picture line identified as the picture line matching the reference picture line during alignment and the picture content of the associated other picture line not matching the reference picture line, $K_{2MA}$ is the correlation coefficient between the picture content of the reference picture line and the picture content of the picture line correlating most with the reference picture line during alignment and during each alignment operation of a similar object the following

quotient:

$$AS = \frac{K_A - K_{M2A}}{1 - K_{M2S}}$$

is determined as a measure (AS) of the alignment reliability.

6. Method as claimed in Claim 5, characterized in that the alignment operation is discontinued and/or an error signal is given if the measure (AS) of the alignment reliability falls below a predetermined value.

7. Method as claimed in one or more of the Claims 1 to 6, characterized in that optical line-by-line scanning of the objects is effected through a suitably selected colour filter.

**Revendications**

1. Procédé pour centrer la position de rotation d'objets rotatifs ou pour positionner des objets coulissants dans une orientation ou une position nominales, notamment pour centrer des supports d'information en forme de disque à lecture optique, suivant lequel, dans une opération de centrage, les objets sont balayés optiquement ligne par ligne, de préférence transversalement à leur sens de mouvement et, après la détection d'une ligne d'image optiquement marquante correspondant à une ligne d'image de référence mémorisée, ils sont centrés ou positionnés par rapport à leur position connue, procédé suivant lequel ladite ligne d'image de référence est déterminée au cours d'une opération de recherche précédant l'opération de centrage, opération de recherche qui consiste notamment à mémoriser, pour chaque ligne d'image, le contenu d'image de celle-ci et à le comparer avec le contenu d'image des autres lignes d'image, à déterminer les coefficients de corrélation correspondants et à déterminer le coefficient de corrélation maximal à partir des coefficients de corrélation correspondants, à choisir comme ligne d'image de référence la ligne d'image dont le coefficient de corrélation maximal est inférieur aux coefficients de corrélation les plus grands de toutes les autres lignes d'image et si, lors de la détermination de la ligne d'image de référence, au cours de la comparaison du contenu d'image d'une ligne d'image avec le contenu d'image des autres lignes d'image, est dépassé un coefficient de corrélation nominal prédéterminé, à éliminer les deux lignes d'image concernées comme lignes d'image de référence possibles de façon à ne plus les comparer avec toutes les autres lignes d'image.

2. Procédé selon la revendication 1, caractérisé en ce que si, après la comparaison du contenu d'image d'une ligne d'image avec le contenu d'image de toutes les autres lignes d'image, il s'avère qu'un coefficient de corrélation prédéterminé n'a pas été atteint au cours de toutes ces comparaisons, on choisit comme nouveau coefficient de corrélation nominal le coefficient de corrélation maximal déterminé au cours de ces comparaisons.

3. Procédé selon la revendication 2, caractérisé en ce que le nouveau coefficient de corrélation nominal est également remplacé de la même manière si celui-ci n'est jamais atteint lors d'une comparaison suivante du contenu d'image d'une ligne avec le contenu d'image de toutes les autres lignes.

4. Procédé selon l'une ou plusieurs des revendications 1 à 3, caractérisé en ce que, lors de la comparaison du contenu d'image d'une ligne d'image mémorisée avec le contenu d'image de toutes les autres lignes d'image, les lignes d'image voisines de la ligne d'image mémorisée sont supprimées.

5. Procédé selon une ou plusieurs des revendications 1 à 4, caractérisé en ce qu'au cours de l'opération de recherche, est déterminé le coefficient de corrélation $K_{M2S}$ entre les contenus d'image de la ligne d'image choisie comme ligne d'image de référence et de la ligne d'image qui est en corrélation la plus étroite avec la ligne d'image choisie, procédé selon lequel, lors de chaque nouvelle opération de centrage, sont déterminés, d'une part, le coefficient de corrélation $K_A$ entre les contenus d'image de la ligne d'image identifiée, lors du centrage, comme ligne d'image de référence et de la ligne d'image de référence mémorisée et, d'autre part, pour l'autre ligne d'image analogue qui ne correspond pas à la ligne d'image de référence, le coefficient de corrélation $K_{M2A}$ entre les contenus d'image de la ligne d'image de référence mémorisée et de la ligne d'image qui, lors du centrage, est en corrélation la plus étroite avec la ligne d'image de référence et, lors de chaque nouvelle opération de centrage d'un objet de même genre, est déterminé comme mesure (AS) de la sûreté de centrage le quotient suivant:

$$A_S = \frac{K_A - K_{M2A}}{1 - K_{M2S}},$$

6. Procédé selon la revendication 5, caractérisé en ce que l'opération de centrage est interrompue et/ou un message d'erreur est émis si la mesure (AS) de la sûreté de centrage diminue au-dessous d'une valeur prédéterminée.

7. Procédé selon une ou plusieurs des revendications 1 à 6, caractérisé en ce que le balayage optique ligne par ligne des objets est effectué à travers un filtre de couleur convenablement choisi.

Fig.1

EP 0 251 379 B1

Fig.2

Fig.3

Fig.4